# EUROPÄISCHE PATENTANMELDUNG

(11) **EP 2 402 129 A2**
(43) Veröffentlichungstag der Anmeldung: **04.01.2012**
(21) Anmeldenummer: 11171661.9
(22) Anmeldetag: 28.06.2011
(51) Int. Cl.: B28B 13/04, B65G 47/22, E01C 19/00

(54) **Verfahren und Vorrichtung zum Gruppieren von Steinen, insbesondere Betonpflastersteinen**

(30) Priorität: 02.07.2010 DE 102010030890
(71) Anmelder: Baustoffwerke Gebhart&söhne GmbH&Co. Kg, 87760 Lachen (DE)
(72) Erfinder:
(74) Vertreter: Lorenz, Markus

(57) **Zusammenfassung**

Die Erfindung betrifft ein Verfahren zum Gruppieren von Steinen, insbesondere Betonpflastersteinen, zu einem Verband. Eine aus mehreren Steinen (1) gebildete erste Steinreihe (100) wird in eine Ausgangsposition in eine Förderstrecke (6) eingebracht. Die Steine (1) werden in der Ausgangsposition derart positioniert, dass die Steine (1) nebeneinander liegen und deren Längsachsen wenigstens annähernd in Richtung der Förderstrecke (6) ausgerichtet sind. Auf die in Förderrichtung hinten liegende Stirnseite (1a) der Steine (1) wird jeweils außermittig eine Schubbewegung eingeleitet, um eine Drehbewegung der Steine (1) um eine senkrechte Achse zu erzeugen. Die Einleitung der Schubbewegung auf die Steine (1) einer Steinreihe (100) erfolgt ausgehend von einem außen liegenden Stein (1') der Steinreihe (100) seriell nacheinander. Durch die Schubbewegung werden die Steine (1) derart gedreht, dass eine in der Ausgangsposition seitlich orientierte Längsseite (1b) des Steines (1) in Vorschubrichtung nach vorne orientiert wird und eine nach der Drehung nach hinten orientierte Längsseite (1c) eines früher gedrehten Steins (1) teilweise überdeckend an einer nach vorne orientierten Längsseite (1b) eines nachfolgenden gedrehten Steines (1) anliegt.

## Beschreibung

Die Erfindung betrifft ein Verfahren zum Gruppieren von Steinen, insbesondere Betonpflastersteinen, zu einem Verband.

Die Erfindung betrifft auch eine Vorrichtung zum Gruppieren von Steinen, insbesondere Betonpflastersteinen, zu einem Verband.

Verfahren und Vorrichtungen zum Herstellen von Steinen, insbesondere Betonpflastersteinen, sind aus dem allgemeinen Stand der Technik bekannt. Betonpflastersteine werden im Allgemeinen auf einem Produktionsbrett hergestellt, welches in der Regel auf eine Steinlage mit einer Länge von 1.200 mm x 800 mm abgestimmt ist. Es sind jedoch auch sogenannte Großbrettmaschinen bekannt, welche die Produktion einer Steinlage mit einer Abmessung von 1.400 mm x 1.400 mm ermöglichen. Um die Steine zu einer Baustelle zu transportieren, werden diese in der Regel auf eine genormte Europalette aufgelegt.

Die Verlegung der Steine, insbesondere der Betonpflastersteine, kann mit Hilfe sogenannter Verlegemaschinen erfolgen. Diese nehmen eine gesamte, z.B. auf einer Europalette angeordnete Produktionslage von Steinen auf und setzen die Steinlage bzw. den Steinverband an der gewünschten Stelle ab. Die Verlegemaschinen nehmen den zu verlegenden Verband im Regelfall entweder über eine Klammer oder eine Vakuumplatte auf. Derartige Verlegemaschinen ermöglichen ein rationelles Verlegen, insbesondere von großen Flächen von Betonpflastersteinen. Alternativ dazu ist auch eine Handverlegung von Betonpflastersteinen bekannt. Diese eignet sich jedoch nur für spezielle, insbesondere kleine Flächen.

Die Betonpflastersteine werden üblicherweise in verschiedenen Verbänden verlegt, bekannt ist insbesondere die Verlegung im Kreuzverband, im Läuferverband, im Fischgrätverband oder im Ellenbogenverband. Bekannt ist auch die Verlegung im Doppel-Ellenbogenverband. Das optische Erscheinungsbild des Verlegemusters wird wesentlich durch den gewählten Verlegeverband beeinflusst. Darüber hinaus kann der Verlegeverband auch in Bezug auf die Aufnahme von Kräften relevant sein. So ist es beispielsweise bekannt, dass ein Fischgrätverband den Vorteil hat, dass Kräfte, die beispielsweise von Fahrzeugreifen in den Verband eingebracht werden, besser abgetragen werden können.

Um ein rationelles Verlegen der Betonpflastersteine mittels einer Verlegemaschine zu ermöglichen, ist es üblich, dass die Betonpflastersteine auf der Palette bereits so angeordnet bzw. gruppiert sind, dass diese dem zu verlegenden Verband, beispielsweise dem Fischgrätverband oder dem Ellenbogenverband, entsprechen. Üblicherweise werden die Betonpflastersteine jedoch in einem sogenannten Kreuzverband hergestellt, d. h. das Verfüllen des Materials der Betonpflastersteine erfolgt mittels einem Füllwagen, einem Kernfüllwagen, einem Vorsatzfüllwagen oder dergleichen in Formen, die zueinander im Kreuzverbund stehen. Insofern nun die Verlegung eines hiervon abweichenden Verbands von Steinen gewünscht ist, besteht die Herausforderung darin, die sich im Kreuzverband befindlichen Steine umzusortieren. Aus dem allgemeinen Stand der Technik ist es hierzu bekannt, Roboter einzusetzen, die die einzelnen Steine aufnehmen und in der dem gewünschten Verband entsprechenden Formatierung auf einer Palette, im Regelfall einer Europalette, ablegen.

Alternativ dazu kann auch bereits bei der Herstellung der Betonpflastersteine eine Form eingesetzt werden, die es ermöglicht, dass die Betonpflastersteine nicht im Kreuzverband, sondern in dem gewünschten, hiervon abweichenden Verband (beispielsweise Fischgrätverband oder Ellenbogenverband) hergestellt werden. Dies hat zunächst den Nachteil, dass für jeden gewünschten Verband eine eigene Form vorhanden sein muss, damit die Betonpflastersteine in der gewünschten Formatierung hergestellt werden können. Des weiteren hat dies den Nachteil, dass beispielsweise bei einem Fischgrätverband die Steine nicht rechtwinklig zu einer vorgegebenen Kante liegen. D. h. wenn der Füllwagen, beispielsweise um den Vorsatzbeton auszubringen, über die Steinformen fährt, verläuft dessen Bewegungsrichtung nicht parallel zur Längsachse der Steine, sondern in einem Winkel (im Regelfall 45°) dazu. Die Verfahrrichtung des Füllwagens, der den Vorsatzbeton ausbringt, ist jedoch dafür verantwortlich, dass die Steine ein Linien- bzw. Streifenmuster erhalten, welches sich in die Richtung erstreckt, in die sich der Füllwagen bewegt. Wenn nun die Längsachse der Steine nicht parallel zur Verfahrrichtung des Füllwagens verläuft, weichen die Linien und Streifen in ihrer Ausrichtung von der Längsachse der Steine ab, was in der Praxis ein im Regelfall nicht gewünschtes optisches Bild ergibt.

Ein weiterer Nachteil des Einsatzes verschiedener Produktionsformen besteht darin, dass, damit der Vorteil der Herstellung der Steine beispielsweise im Fischgrätverband oder im Ellenbogenverband genutzt werden kann, die Produktionslage an die Abmessung der Steinlage, die üblicherweise auf einer Europalette angeordnet wird bzw. die von einer Verlegemaschine aufgenommen werden kann, angepasst sein muss. Die bekannten Verlegemaschinen sind dabei darauf ausgelegt, eine Lage von Steinen in der Größenordnung von 1.200 mm x 800 mm bzw. 1.200 mm x 1.200 mm aufzunehmen. Die auf die Baustellen transportierten Steinlagen, die regelmäßig auf Paletten angeordnet sind, entsprechen daher diesen Abmessungen. Es ist jedoch insbesondere in Belgien und den Niederlanden üblich, dass die Produktion der Steine mittels der bereits genannten Großbrettmaschinen erfolgt. Dadurch ist eine besonders rationelle Herstellung möglich. Insofern jedoch nunmehr die Produktionsform beispielsweise an einen Fischgrätverband oder einen Ellenbogenverband angepasst werden soll, kann die für die Herstellung der Steine zur Verfügung stehende Fläche der Großbrettmaschinen nur noch zum Teil genutzt werden, wodurch die Produktionskapazität deutlich zurückgeht.

Allgemein besteht das Problem darin, dass die Produktionslage üblicherweise größer oder kleiner ist als die Steinlage, die von einer Verlegemaschine aufgenommen werden kann. Es ist üblich, die Produktionslage so zu wählen, dass die Produktion optimiert ist. Eine Anpassung der Produktionslage an die Verlegemaschine ist im Regelfall unwirtschaftlich.

Als Lösung ist es bislang nur bekannt, die bereits erwähnten Roboter einzusetzen, um zu vermeiden, dass die Produktion der Betonpflastersteine an den später zu verlegenden Verband angepasst werden muss. Die Roboter zum Umgruppieren der Steine sind jedoch teuer. Zudem wird eine relativ große Anzahl von Robotern benötigt, damit die Umgruppierung ohne Taktzeitverlust erfolgen kann.

Der vorliegenden Erfindung liegt daher die Aufgabe zugrunde, ein kostengünstiges, schnelles und störunanfälliges Verfahren und eine Vorrichtung zum Gruppieren von Steinen, insbesondere Betonpflastersteinen, zu einem Verband bereitzustellen.

Diese Aufgabe wird hinsichtlich des Verfahrens durch Anspruch 1 gelöst.

Diese Aufgabe wird hinsichtlich der Vorrichtung durch Anspruch 6 gelöst.

Das erfindungsgemäße Verfahren sieht vor, dass eine aus mehreren Steinen gebildete erste Steinreihe in eine Ausgangsposition in eine Förderstrecke eingebracht wird, wonach die Steine in der Ausgangsposition derart orientiert werden, dass die Steine nebeneinander liegen und deren Längsachsen wenigstens annähernd in Richtung der Förderstrecke ausgerichtet sind, wonach auf die in Förderrichtung hinten liegende Stirnseite der Steine jeweils außermittig eine Schubbewegung eingeleitet wird, um eine Drehbewegung der Steine um eine senkrechte Achse zu erzeugen, wonach die Einleitung der Schubbewegung auf die Steine der ersten Steinreihe ausgehend von einem außenliegenden Stein der ersten Steinreihe seriell nacheinander erfolgt, wonach sich die Steine durch die Schubbewegung derart drehen, dass eine in der Ausgangsposition seitlich orientierte Längsseite des Steines in Vorschubrichtung nach vorne orientiert wird und eine nach der Drehung nach hinten orientierte Längsseite eines früher gedrehten Steins teilweise überdeckend an einer nach vorne orientierten Längsseite eines nachfolgend gedrehten Steines anliegt.

Die erfindungsgemäße Vorrichtung sieht eine Zufuhreinrichtung vor, um eine aus mehreren Steinen gebildete erste Steinreihe in einer Ausgangsposition auf einer Förderstrecke nebeneinander so zu positionieren, dass deren Längsachsen wenigstens annähernd in Richtung der Förderstrecke ausgerichtet sind. Ferner sieht die erfindungsgemäße Vorrichtung eine Schubeinrichtung mit Schubelementen vor, wobei jedem Stein der ersten Steinreihe ein Schubelement zugeordnet ist, und wobei das Schubelement an einer zugewandten Stirnseite des zugeordneten Steins bezogen auf eine vertikale Mittelachse der Stirnseite außermittig angreift, wobei die Schubelemente und die Steine derart zueinander in Förderrichtung versetzt angeordnet sind, dass zunächst ein Schubelement an einem außen liegenden Stein angreift und dann die Schubelemente jeweils seriell nacheinander an dem jeweils benachbarten, angrenzenden Stein angreifen, wobei die Schubelemente die Steine nacheinander in eine Drehbewegung zwingen derart, dass eine in der Ausgangsposition seitlich ausgerichtete Längsseite des Steins nach der Drehung in Förderrichtung nach vorne orientiert ist und eine nach hinten orientierte Längsseite eines früher gedrehten Steins teilweise überdeckend an einer nach vorne orientierten Längsseite eines nachfolgend gedrehten Steins anliegt.

Durch die erfindungsgemäße Lösung wird ein Verfahren und eine Vorrichtung geschaffen, die es ermöglicht, die Steine schnell, einfach und kostengünstig umzugruppieren, ohne dass der Einsatz von Robotern notwendig ist und ohne dass dies irgendeine Auswirkung auf die Produktionslage der Steine hat. Die Zuführung einer Steinreihe auf die Förderstrecke bereitet in der Praxis keinerlei Probleme. Insbesondere ist es möglich, die im Kreuzverband hergestellten Steine beispielsweise durch ein stempelartiges Zufuhrelement auf der Förderstrecke zu positionieren bzw. in die Förderstrecke einzubringen. Dies kann durch eine einfache lineare Bewegung erfolgen. Vorzugsweise können die in einer Produktionslage hergestellten Steine durch die Zufuhreinrichtung je nach Bedarf Reihe für Reihe in der Ausgangsposition auf der Förderstrecke positioniert werden. Im Regelfall sind die Steine auf der Produktionslage bereits so ausgerichtet, dass diese nebeneinander liegen, so dass deren Längsachsen jeweils parallel zueinander verlaufen. Dadurch lässt sich eine Steinreihe durch eine einfache Linearbewegung auf der Förderstrecke positionieren, wodurch gleichzeitig erreicht wird, dass die Längsachsen der Steine jeweils in Förderrichtung der Förderstrecke orientiert sind. Die Zuführung der Steinreihen ist unabhängig davon, wie viele Steinreihen auf der Produktionslage hergestellt wurden. Die Produktion der Steine kann somit rationell auf einer Großbrettanlage erfolgen. Ferner ist es möglich, gegebenenfalls nur ein Teilstück einer Steinreihe aufzubringen, insbesondere wenn die Steinreihe der Produktionslage eine geeignete Länge übersteigt.

Dadurch, dass auf die in Förderrichtung hinten liegende Stirnseite der Steine bzw. die einem Schubelement zugewandte Stirnseite der Steine jeweils außermittig eine Schubbewegung aufgebracht wird, erhalten die Steine einen gewünschten Drehimpuls, so dass sich die Steine in der gewünschten Weise drehen. Die Steine drehen sich dabei um eine senkrecht zu der Auflagefläche der Förderstrecke verlaufende Achse bzw. um eine senkrechte Steinachse. Dies lässt sich besonders vorteilhaft erreichen, wenn das einem Stein zugeordnete Schubelement an der Stirnseite des Steins außermittig - bezogen auf eine vertikale Mittelachse der Stirnseite - angreift. Der Drehimpuls, den die Steine erhalten, wird weiter dadurch unterstützt, dass die Einleitung der Schubbewegung auf die Steine einer Steinreihe ausgehend von einem außen liegenden Stein der Steinreihe seriell nacheinander erfolgt. Dabei kann vorgesehen sein, dass die auf den außen liegenden Stein einwirkende Schubbewegung derart außermittig angreift, dass der Stein einen Drehimpuls erhält, durch den die vorne liegende Stirnseite des Steines nach innen, d. h. in Richtung auf die anderen Steine der Steinreihe geschwenkt wird. Hierzu kann vorgesehen sein, dass die Schubbewegung außermittig so angreift, dass die Einleitung der Schubbewegung an einer Stelle erfolgt, die sich zwischen der vertikalen Mittelachse der hinter liegenden Stirnseite des Steines und der Seitenkante der hinten liegenden Stirnseite des Steines befindet, an die kein anderer Stein angrenzt.

Insofern es sich bei dem außen liegenden Stein um einen Stein handelt, der die Steinreihe an der linken Seite begrenzt, ist vorgesehen, dass die Schubbewegung bezogen auf eine vertikale Mittelachse der hinteren Stirnseite nach links versetzt eingeleitet wird, wodurch der Stein eine Drehbewegung nach innen, d. h. in Uhrzeigerrichtung erhält.

Sollte es sich bei dem außen liegenden Stein um einen Stein handeln, der die Steinreihe an der rechten Seite begrenzt, so wird die Schubbewegung bezogen auf eine vertikal verlaufende Mittelachse der hinten liegenden Stirnseite nach rechts versetzt eingeleitet, so dass der Stein wiederum mit seiner vorderen Stirnseite nach innen dreht, in diesem Fall entgegen dem Uhrzeigersinn.

Alle anderen Steine der Steinlage werden vorzugsweise entsprechend mit einer Schubbewegung beaufschlagt, so dass sich alle Steine entweder gleichermaßen im Uhrzeigersinn oder entgegen dem Uhrzeigersinn drehen. Die Drehbewegung der Steine wird dabei jeweils dadurch unterstützt, dass die Steine seriell nacheinander mit der Schubbewegung, ausgehend von einem außen liegenden Stein beaufschlagt werden. Dadurch kann der außen liegende Stein seine Drehbewegung beginnen, bevor der jeweils angrenzende benachbarte und entsprechend weiter innen liegende Stein anfängt zu drehen. Die Drehbewegung der Steine wird dabei durch die Reibung der Steine unterstützt, die sich zwischen der Längsseite des zuerst zu drehenden Steines und der Längsseite des nachfolgend zu drehenden Steines ergibt. Durch die Reibung zwischen zwei Längswänden zweier benachbarter Steine wird das Reindrehen des jeweils in Vorschubrichtung voraus laufenden Steines erleichtert.

Die Drehbewegung wird außerdem dadurch unterstützt, dass der außen liegende Stein in Vorschubrichtung betrachtet dadurch etwas weiter aus der Steinreihe hervorragt, da dieser zuerst von einem Schubelement angeschoben wird. Durch das Hervorragen aus der Steinreihe, bezogen auf den jeweils nachfolgend zu drehenden Stein, kann der Stein besonders gut eindrehen.

Dass ein Schubelement zuerst an einem außen liegenden Stein angreift, lässt sich besonders einfach erreichen, wenn die Steine und die Schubelemente in Förderrichtung versetzt zueinander angeordnet sind. Dies kann beispielsweise dadurch realisiert werden, dass die Steine auf der Förderstrecke in Vorschubrichtung bzw. in Förderrichtung versetzt zueinander angeordnet sind. Es hat sich jedoch als vorteilhaft herausgestellt, wenn die Steine auf der Förderstrecke auf einer Linie liegen die wenigstens annähernd rechtwinklig bzw. quer zur Förderrichtung verläuft und das versetzte Angreifen der Schubelemente an den Steinen dadurch erreicht wird, dass die Schubelemente in Förderrichtung versetzt angeordnet sind, so dass die Schubelemente zeitlich versetzt an den Steinen angreifen.

Die Steine können durch die Schubelemente in Förderrichtung betrachtet treppenförmig/stufenförmig versetzt, bewegt werden.

Durch die Schubbewegung werden die Steine erfindungsgemäß derart gedreht, dass eine in der Ausgangsposition seitlich orientierte Längsseite des Steins in Vorschubrichtung nach vorne orientiert wird und eine nach der Drehung nach hinten orientierte Längsseite eines früher gedrehten Steines teilweise überdecken an einer nach vorne orientierten Längsseite eines nachfolgend gedrehten Steines anliegt. Die Steine befinden sich somit in einer Ausrichtung, die sich zur Herstellung eines Fischgrätverbands oder eines Ellenbogenverbands besonders gut eignet.

Es ist nicht notwendig, dass die Drehung so weit erfolgt, dass die nach vorne orientierte Längsseite des Steins rechtwinklig bzw. quer zur Vorschubrichtung verläuft. Eine Orientierung in Vorschubrichtung ist hierzu bereits ausreichend.

Erfindungsgemäß kann vorgesehen sein, dass der erste Stein, der von den Schubelementen gedreht wird, verglichen mit anderen Steinen etwas länger geradeaus geschoben wird, bevor dieser in eine Drehbewegung gezwungen wird. Dies kann beispielsweise dadurch erreicht werden, dass die Kante des Schubelementes, welches diesen Stein schiebt, etwas schärfer, d. h. etwas weniger gerundet ist, als die Kanten der anderen Schubelemente. Der Erfinder hat erkannt, dass dadurch insgesamt die Drehbewegung der Steine verbessert werden kann.

Die Drehbewegung der Steine kann dadurch unterstützt werden, dass die Schubeinrichtung und/oder die Schubelemente der Schubeinrichtung derart ausgebildet sind, dass sich die einzelnen Steine der Steinreihe bei Bedarf schneller oder langsamer bewegen. Es kann dabei von Vorteil sein, wenn sich die Schubeinrichtung bzw. die Schubelemente zu Beginn, um die Steine aus der Ausgangslage in Förderrichtung zu bewegen, ausgehend von dem zuerst angeschobenen Stein jeweils zunächst langsam und dann schneller vorwärts bewegen und erst, wenn sich alle Steine auf der Förderstrecke bewegen, die Vorschubgeschwindigkeit der Steine schrittweise oder kontinuierlich so erhöht wird, dass sich die Steine mit derselben Geschwindigkeit auf der Förderstrecke vorwärts bewegen. Gegebenenfalls kann eine zunächst langsamere Bewegung der nachfolgend angeschobenen Steine durch eine nachfolgend höhere Bewegungsgeschwindigkeit dieser Steine wieder so kompensiert werden, dass bei Erreichen einer Zwischen- oder Endposition der Abstand der einzelnen Steine der Steinreihe wenigstens annähernd einem Abstand entspricht, der sich einstellen würde, wenn alle Steine, sobald diese von dem zugeordneten Schubelement kontaktiert werden, mit der gleichen Geschwindigkeit geschoben werden.

In Versuchen hat sich herausgestellt, dass es zum Verdrehen der Steine von Vorteil sein kann, wenn die Steine innerhalb bestimmter Abschnitte mit unterschiedlichen Geschwindigkeiten auf der Förderstrecke vorwärts bewegt werden. Hierzu kann beispielsweise vorgesehen sein, dass die Schubeinrichtung entlang der Förderstrecke einer Kulissenführung folgt und/oder zur Verschwenkung bzw. Verdrehung der Schubeinrichtung und/oder zur Verschwenkung bzw. Verdrehung der Schubelemente Aktuatoren, vorzugsweise ein Elektromotor, vorgesehen ist.

Ein Drehpunkt bzw. eine Schwenkachse, um beispielsweise die Schubeinrichtung zu verschwenken oder zu verdrehen, kann bezogen auf die Erstreckung der Steinreihen quer zur Förderrichtung vorzugsweise im Bereich der Mitte, aber auch im Bereich eines Randes angeordnet sein.

Bei dem Schubelement kann es sich beispielsweise um einen Schwenkarm handeln, der an einem Ende oder im Bereich seiner Mitte drehbar bzw. schwenkbar gelagert ist.

Durch eine Verschwenkung oder Verdrehung der Schubeinrichtung während der Vorwärtsbewegung auf der Förderstrecke lässt sich besonders einfach die Geschwindigkeit der einzelnen angeschobenen Steine in Relation zueinander verändern. Der gleiche Effekt kann z. B. auch erreicht werden, wenn die einzelnen Schubelemente der Schubeinrichtung in Förderrichtung zusätzlich ein-oder ausgefahren werden. Dies kann auch alternativ oder ergänzend zu einer Verdrehung oder Verschwenkung der Schubeinrichtung erfolgen.

Ferner kann alternativ oder ergänzend der Einsatz von Aktuatoren vorgesehen sein, um eine Verdrehung oder Verschwenkung oder eine Geschwindigkeitsabweichung der einzelnen Steine zu erzeugen. Insbesondere kann erfindungsgemäß der Einsatz von Elektromotoren vorgesehen sein, um die Schubeinrichtung als Ganzes oder die einzelnen Schubelemente zu verdrehen oder zu verschwenken.

Besonders einfach lässt sich eine Verdrehung oder Verschwenkung der Schubeinrichtung erreichen, wenn diese ein stangenförmiges Grundelement aufweist, welches sich schräg bzw. quer zur Förderstrecke erstreckt und bei Bedarf entsprechend in seinem Winkel zur Förderstrecke verschwenkt werden kann, beispielsweise durch eine Kulissenführung, Aktuatoren, Elektromotoren oder dergleichen.

Von Vorteil ist es, wenn mehrere Steinreihen derart gedreht bzw. umgruppiert und zu einem Verband zusammengeschoben werden. Dies kann beispielsweise dadurch erfolgen, dass die Schubeinrichtung mehrere Steinreihen in einer Endposition zur Bildung eines Verbandes zusammenschiebt. Der Verband kann dabei vorzugsweise derart gebildet werden, dass dieser auf einer Palette, insbesondere einer Europalette, mit einer Abmessung von 1.200 mm x 800 mm angeordnet werden kann.

Nachdem ein derartiger Verband in der Endposition gebildet ist, kann dieser gegebenenfalls durch entsprechende Greifelemente oder durch eine Vakuumeinrichtung angehoben und auf eine Palette abgesetzt werden. Auf einer Palette können dabei eine Mehrzahl derartiger Steinlagen übereinander angeordnet werden.

Erfindungsgemäß kann vorgesehen sein, dass die Schubelemente eine im Wesentlichen vertikal verlaufende Kante aufweisen, welche an dem Stein angreift, um eine Schubbewegung auszuüben. Es hat sich als besonders geeignet herausgestellt, wenn die Schubbewegung über eine vertikale Kante des Schubelements eingeleitet wird. Eine Drehbewegung des Steines lässt sich somit besonders einfach erreichen.

Von Vorteil ist es, wenn die an einem Stein angreifende Kante eines Schubelementes abgerundet ist. In Versuchen hat sich herausgestellt, dass sich mit abgerundeten Kanten eine Drehbewegung besonders vorteilhaft einleiten lässt.

Ferner kann es von Vorteil sein, wenn die Schubelemente eine Anlagefläche aufweisen, an der die Steine mit einer nach hinten orientierten Längsseite nach und/oder während der Drehbewegung anliegen. Dies hat sich als vorteilhaft herausgestellt, um eine stabile Endposition, insbesondere nach Beendigung der Drehbewegung zu erreichen. Des Weiteren lässt sich durch eine derartige Anlagefläche eine zusätzliche Drehbewegung, beispielsweise eingeleitet durch die Schubelemente und/oder die Schubeinrichtung als Ganzes besonders gut auf die Steine übertragen.

Von Vorteil ist es, wenn das Schubelement zur Ausbildung der vertikalen Kante und der Anlagefläche L-förmig oder winkelförmig ausgebildet ist. Durch eine L-förmige oder winkelförmige Ausgestaltung lässt sich einerseits besonders vorteilhaft eine geeignete Kante ausbilden, die die Steine in die Drehbewegung zwingt und andererseits wird dadurch eine vorteilhafte Anlagefläche, die sich an die Kante anschließen kann, ausgebildet.

Von Vorteil ist es, wenn eine zweite Steinreihe in eine Zwischenposition in die Förderstrecke eingebracht wird. Dabei kann es von Vorteil sein, wenn die Steine der zweiten Steinreihe derart orientiert werden, dass deren Längsachse wenigstens annähernd in Richtung der Förderstrecke ausgerichtet ist.

Von Vorteil ist es, wenn die Zufuhreinrichtung ausgebildet ist, um eine zweite Steinreihe in einer Zwischenposition in der Förderstrecke so zu positionieren, dass deren Längsachse wenigstens annähernd in Richtung der Förderstrecke ausgerichtet ist.

Der Erfinder hat erkannt, dass sich die Anordnung einer zweiten Steinreihe in einer Zwischenposition in der Förderstrecke besonders gut eignet, um insbesondere einen Fischgrätverband oder einen Ellenbogenverband herzustellen. Dadurch können zwei Steinreihen bereits auf der Förderstrecke zueinander so positioniert werden, dass diese einen Ellenbogenverband oder einen Fischgrätverband bilden. Dies verringert einerseits die Taktzeit und andererseits hat der Erfinder festgestellt, dass sich durch diese Kombination eine besonders geeignete Ausrichtung auch für die jeweils einzelnen Steinreihen ergibt.

Von Vorteil ist es, wenn wenigstens ein Stein der ersten Steinreihe als Schubstein für einen Stein der zweiten Steinreihe eingesetzt wird, wonach die erste Steinreihe derart an die zweite Steinreihe herangeführt wird, dass eine nach vorne orientierte Längsseite eines Steines der ersten Steinreihe eine Schubbewegung in eine hinten liegende Stirnseite eines Steines der zweiten Steinreihe einleitet und ein hinteres Teilstück einer Längsseite des Steines der zweiten Steinreihe an einer seitlich orientierten Stirnseite eines Steines der ersten Steinseite anliegt, der die nach vorne orientierte Längsseite eines Schubsteines teilweise überdeckt.

Konstruktiv lässt sich dies besonders vorteilhaft dadurch erreichen, dass die Schubeinrichtung der erfindungsgemäßen Vorrichtung die Steine der ersten Steinreihe derart an die Steine der zweiten Steinreihe heranführt, dass jeweils ein Stein der ersten Steinreihe als Schubstein einem Stein der zweiten Steinreihe zugeordnet ist, wobei eine nach vorne orientierte Längsseite des Schubsteins eine Schubbewegung in eine hinten liegende Stirnseite eines Steines der zweiten Steinreihe einleitet und der Stein der zweiten Steinreihe mit einem hinteren Teilstück einer seiner Längsseiten an der Stirnseite eines Steines der ersten Steinreihe anliegt, der die nach vorne orientierte Längsseite des Schubsteines teilweise überdeckt.

Durch diese Lösung werden die Steine der zweiten Steinreihe von den Steinen der ersten Steinreihe aufgrund deren Vorschubbewegung praktisch eingefangen. Dies kann dabei derart erfolgen, dass sich die Steine der zweiten Steinreihe genau an der gewünschten Position befinden, so dass der vorgesehen Verband, beispielsweise ein Fischgrätverband oder ein Ellenbogenverband, ausgebildet wird.

Von Vorteil ist es, wenn die Zufuhreinrichtung die Steine der ersten Steinreihe und/oder die Steine der zweiten Steinreihe im Wesentlichen quer zur Förderrichtung auf der Förderstrecke anordnet, so dass sich zwei benachbarte Steine mit ihren aneinander angrenzenden Längsseiten berühren.

Bei den Steinen, die erfindungsgemäß gruppiert werden, handelt es sich vorteilhafterweise um Steine mit einer rechteckigen Grundfläche.

Besonders vorteilhaft lässt sich die erfindungsgemäße Vorrichtung und das erfindungsgemäße Verfahren anwenden, wenn es sich bei den Steinen um Pflastersteine, insbesondere Betonpflastersteine, insbesondere mit einem üblichen Längenverhältnis von 2:1, beispielsweise in einer Länge von ca. 20 cm und einer Breite von ca. 10 cm, handelt. Dieses Maß hat sich bezüglich der Drehung der Steine und auch dem Einfangen der Steine der zweiten Steinreihe als besonders geeignet herausgestellt. Die Steine der zweiten Steinreihe reihen sich dadurch besonders stabil in die vorgesehenen Lücken bzw. Kontaktflächen der Steine der ersten Steinreihe ein und stabilisieren sich dabei zusätzlich gegenseitig.

In einer konstruktiven Ausgestaltung der Erfindung, insbesondere zur Herstellung eines Ellenbogenverbands, kann vorgesehen sein, dass die Steine der zweiten Steinreihe im Wesentlichen ohne Änderung deren Orientierung von den Steinen der ersten Steinreihe in eine Endposition geschoben werden. Konstruktiv kann hierzu vorgesehen sein, dass die Schubeinrichtung die Steine der zweiten Steinreihe im Wesentlichen ohne Änderung deren Orientierung in eine Endposition schiebt.

In einer weiteren konstruktiven Ausführung kann vorgesehen sein, dass, insbesondere zur Ausbildung eines Fischgrätverbands, die Steine der zweiten Steinreihe und die Steine der ersten Steinreihe gedreht werden, so dass die Längsachsen der Steine der Steinreihen schräg zur Förderrichtung verlaufen. Konstruktiv kann dies vorzugsweise dadurch erfolgen, dass die Schubeinrichtung die Steine der zweiten Steinreihe und die Steine der ersten Steinreihe derart gegenüber der Förderstrecke verdreht, dass die Längsachsen der Steine der ersten Steinreihe und der zweiten Steinreihe schräg zur Fördereinrichtung verlaufen und zueinander in einem Winkel von wenigstens annähernd 90° ausgerichtet sind.

Durch eine Drehung der Steine der zweiten Steinreihe lässt sich besonders einfach ein Fischgrätmuster erzeugen. Vorzugsweise erfolgt die Drehung dabei derart, dass die Längsachsen der Steine der zweiten Steinreihe um 15 bis 75°, vorzugsweise 40 bis 50°, besonders bevorzugt wenigstens annähernd 45° gegenüber der Förderrichtung geneigt verlaufen. Die Längsachsen der Steine der ersten Steinreihe verlaufen dabei vorzugsweise senkrecht zu den Längsachsen der Steine der zweiten Steinreihe.

Der Erfinder hat erkannt, dass sich dadurch in der Endposition besonders einfach die Ausbildung von Steinreihen erreichen lässt, die im Fischgrätverband zueinander angeordnet sind.

Alternativ dazu, dass die Steine der zweiten Steinreihe durch die Steine der ersten Steinreihe gedreht werden bzw. dass die Drehung durch die Schubeinrichtung erfolgt, kann auch vorgesehen sein, dass die Drehung durch andere Mittel, beispielsweise durch einen Drehtisch oder weitere zusätzliche Elemente erfolgt. Vorstellbar ist es auch die Drehung durch eine Greifeinrichtung oder eine Vakuumeinrichtung zu erzeugen. Es hat sich jedoch im Rahmen der Erfindung als besonders einfach, schnell und prozesssicher herausgestellt, wenn die Drehung der Steine der zweiten Steinreihe in der beschriebenen Weise eingeleitet wird.

Von Vorteil ist es, wenn mehrere durch eine erste und eine zweite Steinreihe gebildete Steindoppelreihen in der Endposition zu einem Verband, insbesondere einem Ellenbogenverband oder einem Fischgrätverband, zusammengeschoben werden.

Die Ausbildung von Steindoppelreihen hat sich als besonders geeignet herausgestellt, um mit kurzen Taktzeiten einen gesamten Steinverband herzustellen, der dann ggf. auf einer entsprechenden Palette abgelegt werden kann.

Von Vorteil ist es, wenn die Schubeinrichtung von der Endposition derart in die Ausgangsposition zurückführbar ist, dass durch die Zufuhreinrichtung während der Rückführbewegung der Schubeinrichtung die erste und/oder die zweite Steinreihe auf der Förderstrecke positionierbar ist. Besonders einfach kann dies dadurch erfolgen, dass die Schubeinrichtung während der Rückführbewegung angehoben wird. Durch die Möglichkeit, bereits während der Rückführbewegung mittels der Zufuhreinrichtung die erste und/oder die zweite Steinreihe auf der Förderstrecke zu positionieren, werden besonders kurze Taktzeiten erreicht.

Erfindungsgemäß kann vorgesehen sein, dass insbesondere im Bereich der Endposition Seitenführungen vorgesehen sein können, die die Steinreihen bzw. den zu bildenden Verband seitlich (bezogen auf die Vorschubrichtung) begrenzen, um eine definierte Führung am Rand zu erreichen. Derartige Seitenbegrenzungen können, insbesondere bei der Erstellung eines Fischgrätverbands auch von Vorteil sein um ein Ausbrechen der äußersten Steine - nach deren Drehung - zu vermeiden.

Erfindungsgemäß kann vorgesehen sein, dass die Schubeinrichtung und/oder die Schubelemente eine Drehbewegung oder eine Schwenkbewegung durchführen, bevor die Steine der ersten Steinreihe die Steine der zweiten Steinreihe erreichen. Die Drehbewegung kann dabei insbesondere so gewählt werden, dass diese eine Anordnung der Steine in einer gewünschten Position bezüglich der Schubelemente bzw. bezüglich der Schubeinrichtung unterstützt, so dass die Steine der ersten Steinreihe exakt positioniert sind. Dabei kann vorgesehen sein, dass die Steine, insbesondere wenn das Schubelement als L-förmiges Element ausgebildet ist, mit Teilstücken einer Längsseite und einer Stirnseite an der Innenfläche des jeweils zugeordneten L-förmigen Schubelementes vorzugsweise wenigstens annähernd bündig anliegen.

Erfindungsgemäß kann auch vorgesehen sein, dass die Schubeinrichtung wenigstens zweiteilig ausgebildet ist, wobei ein erster Teil dafür verantwortlich ist, die Steine der ersten Steinreihe erfindungsgemäß zu drehen und ein zweiter Teil für die Zuführung der Steine der ersten Steinreihe zu den Steinen der zweiten Steinreihe und/oder die Drehung der Steine der zweiten Steinreihe, beispielsweise zum Erzeugen eines Fischgrätverbands, vorgesehen ist.

Die Vorschubbewegung der Steine auf der Förderstrecke und/oder deren Drehbewegung kann dadurch unterstützt werden, dass die Förderstrecke mit einem geeigneten Material oder einer Beschichtung, beispielsweise einer Gummibeschichtung versehen ist. Es kann sich dabei sowohl eignen, die Förderstrecke mit einem Material mit einer guten Gleiteigenschaft als auch mit einem die Vorschubbewegung hemmenden Material zu beschichten oder zu versehen.

Vorteilhafte Weiterbildungen und Ausgestaltungen der Erfindung ergeben sich aus den weiteren abhängigen Ansprüchen. Nachfolgend ist ein Ausführungsbeispiel der Erfindung prinzipmäßig dargestellt.

Es zeigt:
- Fig. 1: eine prinzipmäßige Draufsicht auf eine im Kreuzverband hergestellte Produktionsanlage von Betonpflastersteinen nach Verlassen der Produktion;
- Fig. 2: eine prinzipmäßige Darstellung eines Fischgrätverbands von Steinen auf einer Palette;
- Fig. 3: eine prinzipmäßige Darstellung eines Ellenbogenverbands von Steinen auf einer Palette;
- Fig. 4: eine prinzipmäßige Draufsicht auf eine Darstellung einer erfindungsgemäßen Vorrichtung mit einer sich in der Ausgangsposition befindlichen ersten Steinreihe und einer in einer Zwischenposition angeordneten zweiten Steinreihe;
- Fig. 5: eine prinzipmäßige Darstellung der Erfindung, wobei ein außen liegender Stein und mehrere angrenzende Steine der ersten Steinreihe bereits von einer Schubeinrichtung in Förderrichtung geschoben und teilweise eingedreht sind;
- Fig. 6: eine Darstellung gemäß Fig. 5, wobei alle Steine der ersten Steinreihe vollständig eingedreht sind;
- Fig. 7: eine Darstellung gemäß Fig. 6, bei der drei Steine der ersten Steinreihe in ihrer Funktion als Schubsteine bereits drei Steine der zweiten Steinreihe kontaktieren;
- Fig. 8: eine Darstellung gemäß Fig. 7, wobei alle Steine der zweiten Steinreihe von Steinen der ersten Steinreihe geschoben werden;
- Fig. 9: eine Darstellung gemäß Fig. 8, wobei die durch die erste und die zweite Steinreihe gebildete Doppelsteinlage eine Endposition erreicht hat und mit dort bereits positionierten Steinen zu einem Verband zusammengefügt ist, in einer Darstellung eines Ellenbogenverbands;
- Fig. 10: eine Darstellung gemäß Fig. 8, wobei die erste und die zweite Steinreihe zur Ausbildung eines Fischgrätverbands durch das Schubelement um 45° gedreht ist;
- Fig. 11: eine Darstellung gemäß Fig. 10, wobei die durch die erste und die zweite Steinreihe gebildete Doppelsteinlage eine Endposition erreicht hat und mit dort bereits positionierten Steinen zu einem Verband zusammengefügt ist, in einer Darstellung eines Fischgrätverbands; und
- Fig. 12: eine Prinzipdarstellung einer möglichen Ausbildung der Schubeinrichtung in Verbindung mit einer Kulissenführung.

Vorrichtungen und Verfahren zum Herstellen von Betonpflastersteinen sind aus dem allgemeinen Stand der Technik hinlänglich bekannt, weshalb hierauf in der Folge nicht näher eingegangen wird.

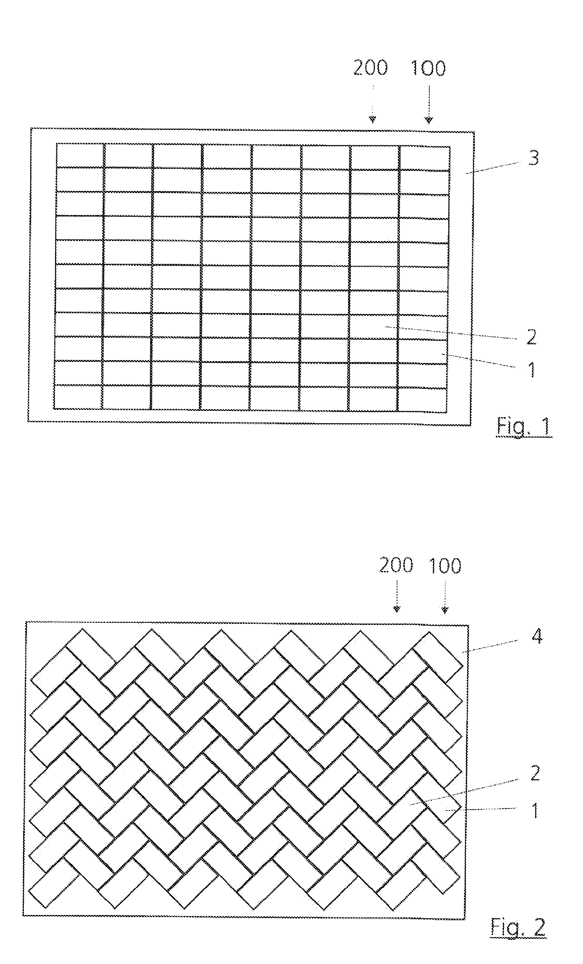

Fig. 1 zeigt einen aus mehreren Steinen 1, 2 gebildeten Verband von Steinen, bei denen es sich im Ausführungsbeispiel um Betonpflastersteine handelt. Die Betonpflastersteine 1, 2 sind in Fig. 1 auf einem sogenannten Produktionsbrett 3 angeordnet, bei dem es sich um ein Produktionsbrett beliebiger Größe handeln kann, beispielsweise mit einer Standardgröße von 1.200 mm x 1.200 mm. Es kann sich jedoch auch um ein sogenanntes Großbrett handeln, welches die Produktion von Seinlagen mit Abmessungen von bis zu 1.400 mm x 1.400 mm ermöglicht. Die Steine 1, 2 sind in mehreren Steinreihen im sogenannten Kreuzverband auf dem Produktionsbrett 3 angeordnet. Von den Steinreihen ist zur Erläuterung der nachfolgenden Erfindung eine erste Steinreihe mit dem Bezugszeichen 100 und eine zweite Steinreihe mit dem Bezugszeichen 200 versehen. Die Steinreihe 100 wird dabei durch Steine 1 und die Steinreihe 200 durch Steine 2 gebildet.

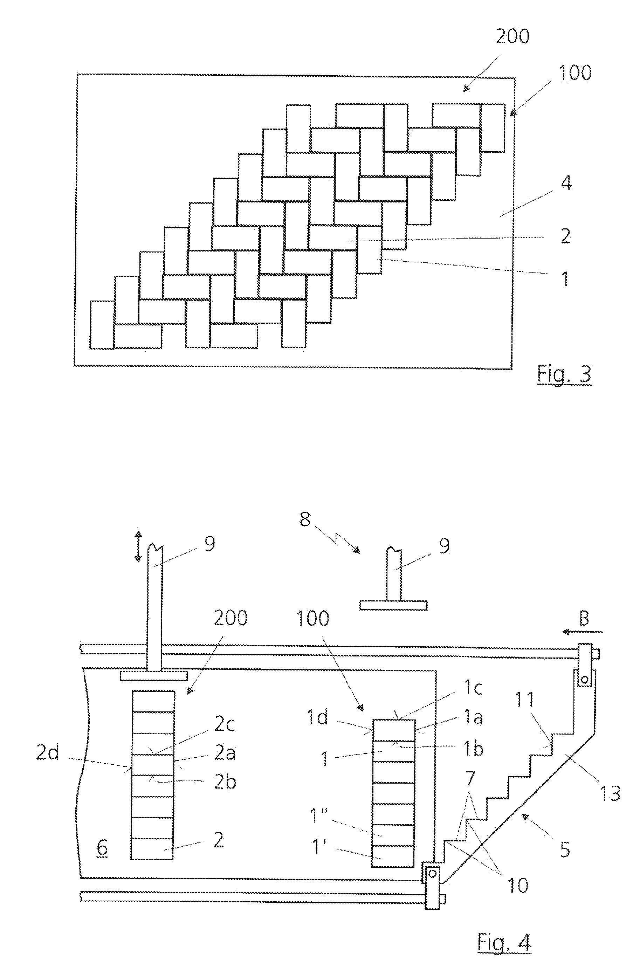

Die Fig. 2 zeigt eine Anordnung von Steinen 1, 2 in einem Fischgrätverband auf einer Palette 4. Die Palette 4 weist im Ausführungsbeispiel eine Abmessung von 1.200 x 800 mm und somit die Standardgröße einer Europalette auf. Derartige Paletten werden im Regelfall verwendet, um die Betonpflastersteine 1, 2 auf die Baustelle zu transportieren. Auf der Baustelle kann die gesamte Steinlage von der Palette 4 mit Hilfe einer nicht näher dargestellten Verlegemaschine lagenweise abgehoben werden, um diese zu verlegen. Auf der in Fig. 4 prinzipmäßig dargestellten Palette 4 können mehrere Lagen von Steinen 1, 2 übereinander angeordnet sein. Der in Fig. 2 dargestellte Fischgrätverband setzt sich aus einer Mehrzahl von Steinreihen 100, 200 zusammen.

Fig. 3 zeigt eine Darstellung eines Ellenbogenverbands, der sich von dem in Fig. 2 dargestellten Fischgrätverband im Wesentlichen durch seine Ausrichtung unterscheidet. Beim Verlegen von Betonpflastersteinen 1, 2, die im Ellenbogenverband angeordnet sind, kann es notwendig sein, in den Randbereichen der verlegten Steinlagen einzelne Steine von Hand zu verlegen, damit eine Verbindung zwischen den durch die Verlegemaschine verlegten im Verband angeordneten Steinlagen hergestellt werden kann. Hierbei handelt es sich um eine bekannte Maßnahme, auf welche nachfolgend nicht näher eingegangen wird.

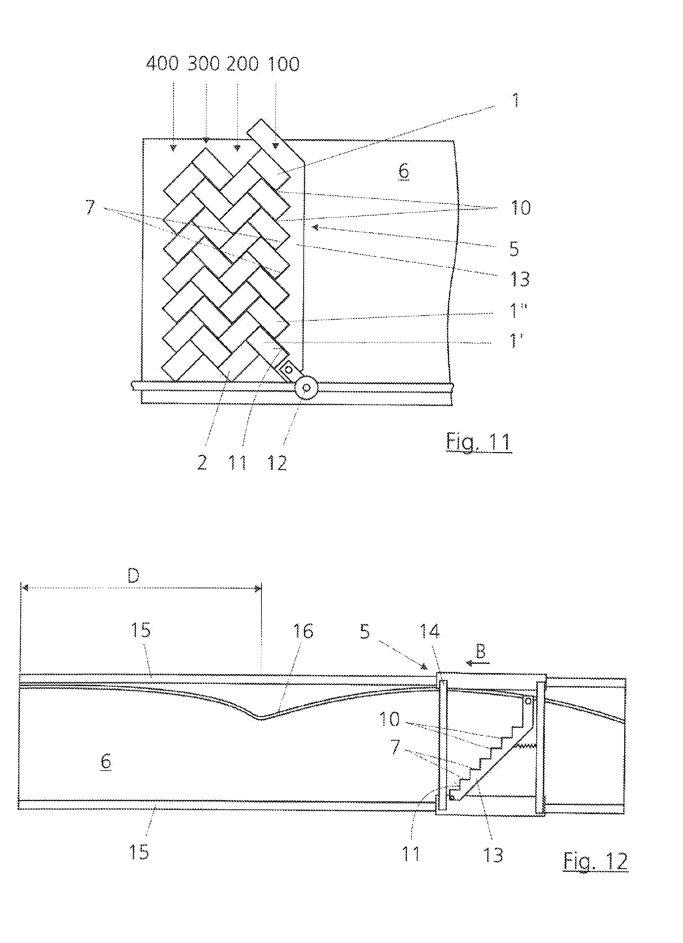

Die Figuren 1, 2 und 3 zeigen drei wesentliche Verbände, in denen Betonpflastersteine 1, 2 typischerweise verlegt werden. Zusätzlich ist auch noch die Verlegung in einem sogenannten Läuferverband gängig, wozu es jedoch lediglich erforderlich ist, die Steine in Längsrichtung zueinander zu verschieben. Eine Verlegung im Läuferverband stellt in der Praxis kein Problem dar, so dass hierauf nachfolgend nicht näher eingegangen wird. Die Figuren 4 bis 10 zeigen prinzipmäßig die Funktionsweise des erfindungsgemäßen Verfahrens bzw. der erfindungsgemäßen Vorrichtung. Ein prinzipmäßiger, einfacher Aufbau einer Schubeinrichtung 5, um die Betonpflastersteine 1, 2 auf einer Förderstrecke 6 in Förderrichtung bzw. in Vorschubrichtung zu schieben, ist in der Fig. 12 dargestellt. Hierauf ist die Erfindung jedoch nicht beschränkt, insbesondere kann es vorteilhaft sein durch entsprechende elektronische Steuerungen und/oder durch den Einsatz von Elektromotoren und anderen Aktuatoren, den in den Figuren 4 bis 11 näher beschriebenen Bewegungsablauf zu realisieren, um die Steine 1, 2 zu gruppieren.

Die Fig. 4 zeigt die Förderstrecke 6 und eine stark abstrahierte Prinzipdarstellung der Schubeinrichtung 5. In einer Ausgangsposition der Förderstrecke 6 ist eine aus mehreren Steinen 1 gebildete erste Steinreihe 100 eingebracht. Die Steine 1 der ersten Steinreihe 100 sind dabei in der Ausgangsposition derart orientiert, dass die Steine 1 nebeneinander liegen und deren Längsachse wenigstens annähernd in Richtung der Förderstrecke ausgerichtet ist. Die Förderrichtung bzw. die Vorschubrichtung ist in Fig. 4 mit dem Pfeil B bezeichnet. Durch die Schubeinrichtung 5 wird auf die in Förderrichtung hinten liegende Stirnseite 1a der Steine 1 jeweils außermittig eine Schubbewegung eingeleitet. Die Einleitung der Schubbewegung auf die Steine 1 der ersten Steinreihe 100 folgt dabei ausgehend von einem außen liegenden Stein 1' (in Fig. 4 der in der Zeichnungsebene unten dargestellte bzw. in Vorschubrichtung links angeordnete Stein) seriell nacheinander.

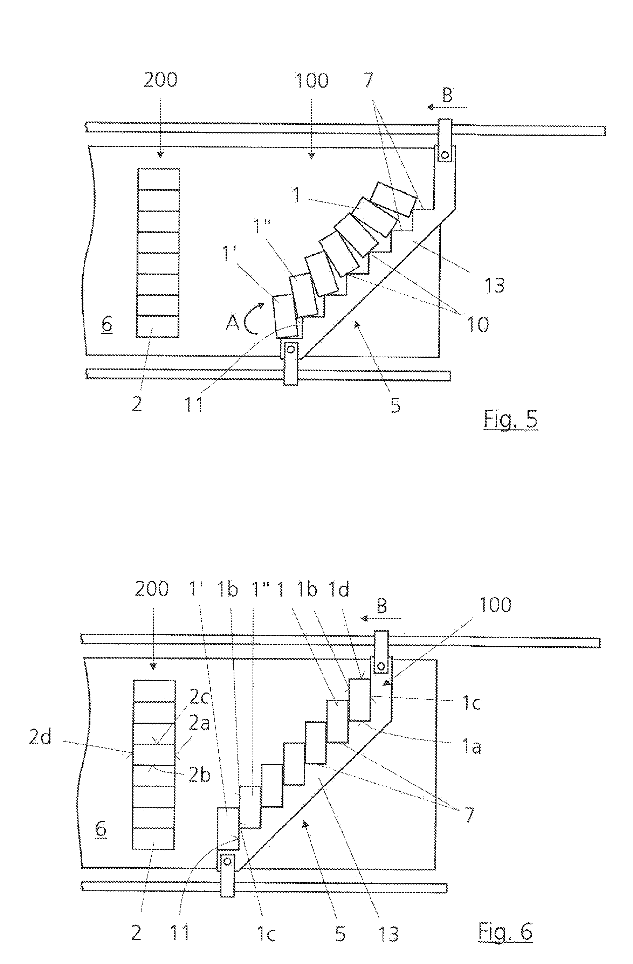

Im Ausführungsbeispiel wird die Schubbewegung bezogen auf eine vertikale Mittelachse der Stirnseite 1a außermittig (in der Zeichnungsebene in Vorschubrichtung betrachtet nach links versetzt) eingeleitet. Allgemeiner formuliert ist es lediglich notwendig die Schubbewegung so einzuleiten, dass sich der Stein aufgrund der Schubbewegung um eine senkrechte Achse dreht (siehe Pfeil "A" in Fig. 5).

Im Ausführungsbeispiel ist vorgesehen, dass die Schubeinrichtung 5 eine Mehrzahl von Schubelementen 7 aufweist, wobei jedem Stein 1 der ersten Steinreihe 100 ein Schubelement 7 zugeordnet ist. Die Schubelemente 7 sind gegenüber den Steinen in Förderrichtung versetzt angeordnet. Das einem außenliegenden Stein 1' zugeordnete Schubelement 7 weist im Ausführungsbeispiel einen Abstand "x" zu diesem auf. Der nächste angrenzende Stein 1" und das zugeordnete Schubelement 7 weisen einen hierzu vergrößerten Abstand "x + x₁" auf. Das daran angrenzende Stein-/Schubelement -Paar weist zueinander einen Abstand von "x + x₁ + x₂" auf, etc.. Somit vergrößert sich der Abstand den ein Stein-/Schubelement-Paar zueinander aufweist jeweils verglichen zu einem vorherigen, angrenzenden Stein-/Schubelement-Paar ausgehend von dem außenliegenden Stein 1'. Die Abstandsvergrößerung erfolgt vorzugsweise in gleichmäßigen Schritten. Im Ausführungsbeispiel wird der Versatz dadurch erreicht, dass die Schubelemente 7 in Vorschubrichtung versetzt zueinander angeordnet sind. Die Steine 1 liegen hingegen auf einer sich quer zur Vorschubrichtung erstreckenden Linie.

Dies führt dazu, dass wie in Fig. 4 dargestellt, zunächst ein Schubelement 7 an einem außen liegenden Stein 1' angreift und dann die Schubelemente 7 jeweils seriell nacheinander an dem jeweils benachbarten, angrenzenden Stein 1" angreifen. In Fig. 1 ist lediglich beispielsweise der erste außen liegende Stein mit dem Bezugszeichen 1' und der daran angrenzend benachbarte Stein mit dem Bezugszeichen 1" versehen. Die Steine 1', 1" unterscheiden sich nicht von den Steinen 1.

Die Schubelemente 7 zwingen die Steine 1 nacheinander in eine Drehbewegung, im Ausführungsbeispiel beginnend mit dem Stein 1' und dann dem Stein 1" usw. (siehe Fig. 5). Die Drehbewegung erfolgt derart, dass eine in der Ausgangsposition seitlich ausgerichtete Längsseite 1b eines Steins 1 nach der Drehung in Vorschubrichtung nach vorne orientiert ist. Eine nach der Drehung nach hinten orientierte Längsseite 1c eines früher gedrehten Steines (im Ausführungsbeispiel z. B. des Steines 1') liegt dabei teilweise überdeckend an einer nach vorne orientierten Längsseite 1b eines nachfolgend gedrehten Steins (im Ausführungsbeispiel z. B. des Steines 1") an. Dies ist gut aus einer Zusammenschau der Figuren 4 bis 6 ersichtlich.

Wie sich aus Fig. 6 ergibt, befindet sich die Steinreihe 100 nach Beendigung der Drehung in einer Position, in der diese zur Bildung eines Fischgrätmusters gemäß Fig. 2 oder zur Bildung eines Ellenbogenmusters gemäß Fig. 3 verwendet werden kann.

Wie sich aus Fig. 4 prinzipmäßig ergibt, weist die im Ausführungsbeispiel dargestellte erfindungsgemäße Vorrichtung eine Zufuhreinrichtung 8 auf, um die Steinreihen 100, 200 bzw. gegebenenfalls auch nur eine Steinreihe 100 auf der Förderstrecke 6 zu positionieren. Die Zufuhreinrichtung 8 weist im Ausführungsbeispiel zwei Lineareinheiten 9 auf, die als Stempel oder dergleichen ausgebildet sein können, um die Steinreihen 100, 200 entsprechend auf der Förderstrecke 6 zu positionieren.

Im Ausführungsbeispiel ist vorgesehen, dass die prinzipmäßig dargestellten Schubelemente 7 eine im Wesentlichen vertikal verlaufende Kante 10 aufweisen, welche an dem Stein angreift, um eine Schubbewegung auszuüben. In nicht näher dargestellter Weise ist im Ausführungsbeispiel vorgesehen, dass die die hintere Steinseite 1a kontaktierende Kante 10 des Schubelements 7 abgerundet ist. Dabei kann vorgesehen sein, dass das Schubelement 7, welches zuerst einen zugeordneten Stein 1 kontaktiert - im Ausführungsbeispiel den in Förderrichtung links außen liegenden Stein 1' der Steinreihe 100 - eine weniger stark abgerundete Kante 10 bzw. eine spitze Kante aufweist, so dass die Drehbewegung des Steines 1 etwas später eingeleitet wird.

Wie sich ferner aus der prinzipmäßigen Darstellung der Schubeinrichtung 5 ergibt, weist diese im Ausführungsbeispiel eine Anlagefläche 11 auf, an der die Steine 1 nach Vollendung oder auch bereits während der Drehbewegung anliegen können. Dies ist gut aus den Figuren 4, 5 und 6 ersichtlich. Im Ausführungsbeispiel sind die Schubelemente 7 als Winkelstück bzw. L-förmig ausgebildet.

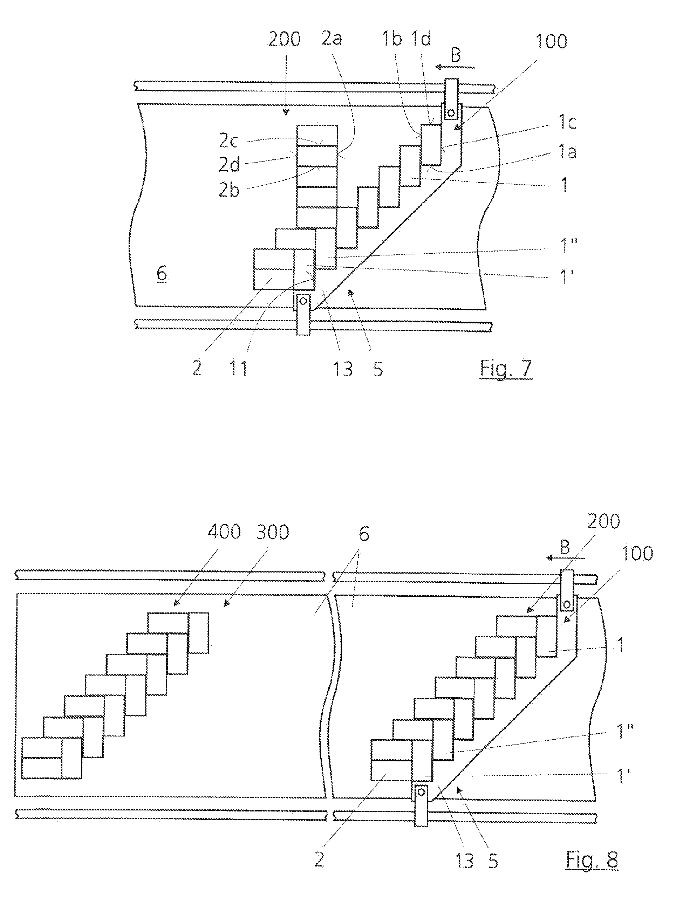

Wie sich aus den Figuren 4 bis 11 ergibt, ist auf der Förderstrecke 6 eine zweite Steinreihe 200 in einer Zwischenposition eingebracht und dort so positioniert, dass deren Längsachsen wenigstens annähernd in Richtung der Förderstrecke 6 ausgerichtet sind. Wie sich insbesondere aus den Figuren 7, 8 und 10 ergibt, ist im Ausführungsbeispiel vorgesehen, dass die Schubeinrichtung 5 die Steine 1 der ersten Steinreihe 100 derart an die Steine 2 der zweiten Steinreihe 200 heranführt, dass jedem Stein 2 ein Stein der ersten Steinreihe 100 als Schubstein zugeordnet ist. Dabei leitet eine nach vorne orientierte Längsseite 1b des Schubsteins in eine hinten liegende Stirnseite 2a eines Steines 2 der zweiten Steinreihe 200 eine Schubbewegung ein. Die Steine 1 der ersten Steinreihe 100 werden dabei derart an die Steine 2 der zweiten Steinreihe 200 herangeführt, dass der von dem Schubstein kontaktierte Stein 2 der zweiten Steinreihe mit einem hinteren Teilstücks einer Längsseite 2b an der Stirnseite 1d eines Steines 1 der ersten Steinreihe 100 anliegt, der die nach vorne orientierte Längsseite 1b des Schubsteins teilweise überdeckt.

Wie insbesondere in den Figuren 7, 8 und 10 erkennbar, werden die Steine 2 zusätzlich dadurch stabilisiert, dass deren Längsseiten teilweise aneinander anliegen.

Die Beschreibung im Ausführungsbeispiel beruht darauf, dass von der Schubeinrichtung 5 zunächst ein in Förderrichtung links au-βen liegender Stein 1' angeschoben wird. Insofern vorgesehen ist zuerst einen rechts außen liegenden Stein anzuschieben, ändert sich die Drehrichtung - wie beschrieben - entsprechend. Das Prinzip ist jedoch identisch. Die Beschreibung im Ausführungsbeispiel gilt entsprechend angepasst analog auch für diese Ausführungsform.

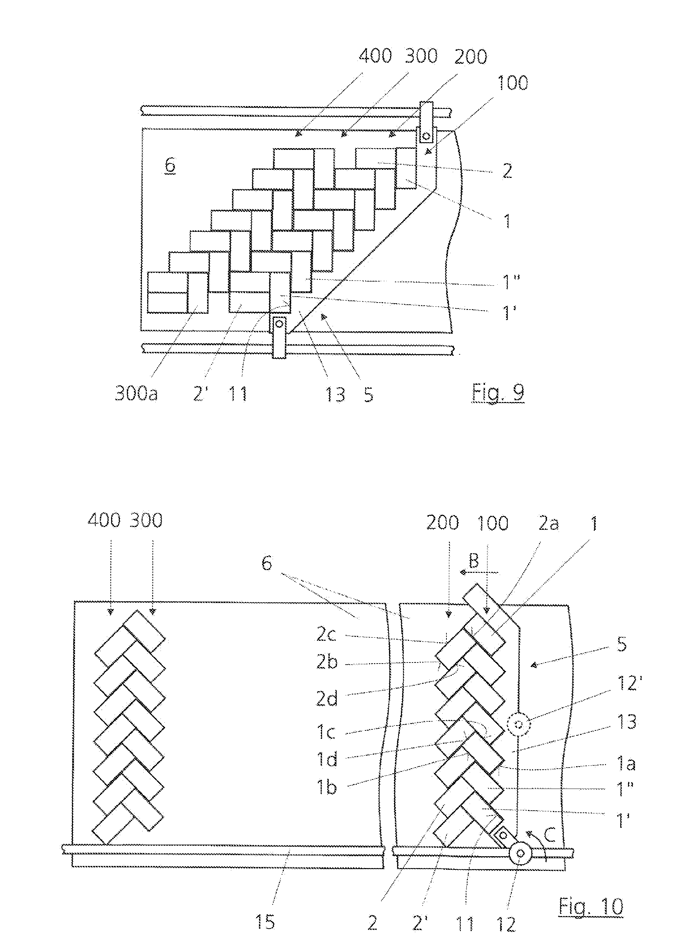

Fig. 8 zeigt eine Möglichkeit, einen Ellenbogenverband zu bilden. Dabei ist vorgesehen, dass die Schubeinrichtung 5 die in Fig. 8 dargestellten Steine 2 der zweiten Steinreihe 200 im Wesentlichen ohne Änderung deren Orientierung in eine Endposition schiebt. Hierzu muss die Schubeinrichtung 5 lediglich linear verfahren werden. In Fig. 8 ist am linken Rand der Zeichnung bereits eine sich in der Endposition befindliche Doppelsteinreihe 300, 400 dargestellt. Die Fig. 9 zeigt das Zusammenfügen der bereits in der Endposition angeordneten Doppelsteinreihe 300, 400, die mit der neu zugeführten Doppelsteinreihe 100, 200 zusammengeschoben wurde, um einen Ellenbogenverband, auszubilden. Hierbei kann vorgesehen sein, dass noch weitere Doppelsteinreihen angefügt werden.

Wie sich aus Fig. 7, 8 und 9 ergibt, schiebt ein in Förderrichtung links außen liegender Stein 1 (im Ausführungsbeispiel der Stein 1'), der von der Schubeinrichtung 5 zuerst angeschoben wird, zwei Steine 2. Die Steinreihe 200 weist entsprechend einen Stein mehr auf als die Steinreihe 100. Dies ist optional. Die Steinreihe 200 kann auch die selbe Anzahl von Steinen (ggf. auch weniger oder mehr Steine) aufweisen. Dass der Stein 1' im Ausführungsbeispiel zwei Steine 2 schiebt ermöglicht es den Ellenbogenverband manuell oder automatisiert zu komplettieren in dem der in Förderrichtung links außen liegende Stein 2 (im Ausführungsbeispiel der Stein 2' in Fig. 9), so weit nach vorne geschoben wird, dass dieser die nach hinten orientierte Längsseite eines Steines einer in Förderrichtung davor angeordneten Steinreihe 300 kontaktiert. Dieser Stein ist in Fig. 9 mit dem Bezugszeichen 300a bezeichnet. Das Vorschieben des Steins 2' kann ggf. auch erst auf der Baustelle erfolgen.

Fig. 10 zeigt eine Möglichkeit, einen Fischgrätverband aus der in Fig. 8 dargestellten Doppelsteinreihe, d. h. der ersten Steinreihe 100 und der zweiten Steinreihe 200 herzustellen.

Abweichend von Fig. 8 (und den Fig. 4 bis 7 analog) weist die Steinreihe 200 hierzu die gleiche Anzahl von Steinen auf wie die Steinreihe 100. Das bereits bezüglich der Figuren 4 bis 8 erläuterte Prinzip bleibt jedoch das Gleiche. Im Ausführungsbeispiel ist zur Herstellung des Fischgrätverbands vorgesehen, dass jeder Stein 1 genau einen Stein 2 schiebt. Hierauf ist die Erfindung jedoch nicht beschränkt.

Wie sich gut aus einer Zusammenschau der Fig. 8 mit der Fig. 10 erkennen lässt, ist vorgesehen, dass die Schubeinrichtung 5 die Steine 2 der zweiten Steinreihe 200 und die Steine 1 der ersten Steinreihe 100 derart gegenüber der Förderrichtung der Förderstrecke 6 verdreht, dass die Längsachsen der Steine 1 der ersten Steinreihe 100 und der Steine 2 der zweiten Steinreihe 200 schräg zur Förderrichtung verlaufen. Die Längsachsen der Steine 1 und 2 stehen dabei zueinander in einem Winkel von wenigstens annähernd 90°. Im Ausführungsbeispiel ist vorgesehen, dass die Steine gegenüber der Förderrichtung der Fördereinrichtung in einem Winkel von 45° +/- 5° ausgerichtet sind.

Fig. 10 zeigt in einer Endposition eine bereits gedrehte Doppelsteinreihe 300, 400, der nun, wie in Fig. 11 dargestellt, die entsprechend durch die Schubeinrichtung 5 gedrehte neue Doppelsteinreihe 100, 200 zugeführt wird, so dass in der Endposition ein Fischgrätverband ausgebildet wird. Dieser Fischgrätverband kann durch Hinzufügen weiterer einzelner Steinreihen oder Doppelsteinreihen entsprechend vergrößert werden.

Wie aus Fig. 10 ersichtlich kann eine Führungsschiene 15 (in beliebiger Ausgestaltung) vorgesehen sein, welche einen in Förderrichtung links außen liegenden Stein 2' stützt bzw. führt. Insofern der zuerst angeschobene Stein 1 in Förderrichtung rechts außen liegt, kann die Führungsschiene 15 analog rechts vorgesehen sein. Es können auch an beiden Seiten der Förderstrecke Führungsschienen 15 vorgesehen sein.

Die entsprechende Verdrehung um die Doppelsteinreihe 100, 200, die zur Ausbildung eines Ellenbogenverbands geeignet ist (siehe Fig. 8) zu verdrehen, kann technisch in vielfältiger Art und Weise umgesetzt werden. Im Ausführungsbeispiel ist vorgesehen, dass die Schubeinrichtung 5 um eine Schwenkachse 12 (Pfeil "C") bzw. um einen Drehpunkt verschwenk- bzw. verdrehbar ist. Vorgesehen ist dabei im Ausführungsbeispiel ausgehend von Fig. 8 eine Verschwenkung um ca. 45°, so dass sich das in Fig. 10 dargestellte Bild ergibt und die Längsachsen der Steine um 45° gegenüber der Förderrichtung verschwenkt sind. Im Ausführungsbeispiel ist die Schwenkachse 12 im Bereich des linken Endes der Schubeinrichtung 5 bzw. einer Schubstange 13 der Schubeinrichtung 5 dargestellt (in Förderrichtung betrachtet). Grundsätzlich kann die Schwenkachse 12 jedoch an einer beliebigen Stelle der Schubeinrichtung 5 bzw. der konkret dargestellten Schubstange 13 angeordnet sein. Es kann sich als vorteilhaft herausstellen, die Schwenkachse 12 der Schubeinrichtung 5 bezogen auf die Erstreckung der Steinreihen 100, 200 quer zur Förderrichtung vorzugsweise im Bereich der Mitte anzuordnen. Dies hat den Vorteil, dass bei einer Verschwenkung der Schubeinrichtung 5 die zusätzliche Geschwindigkeitskomponente die auf die Steine 1, 2 am Rand der Steinreihe 100, 200 einwirkt - verglichen mit einer Schwenkachse 12 am Ende der Schubeinrichtung 5 - geringer ist und somit ein Herausschleudern der Steine 1, 2 aus der vorgesehenen Position bezüglich des Schubelements 7 verringert wird. Eine mögliche mittige Positionierung der Schwenkachse ist in Fig. 10 strichliniert dargestellt und mit dem Bezugszeichen 12' versehen.

In Fig. 10 ist zur Vereinfachung der Darstellung eine in Förderrichtung betrachtet rechte Führungsschiene an der die Schubeinrichtung 5 verfahrbar befestigt sein kann, nicht dargestellt.

Die Verschwenkbewegung der Schubeinrichtung 5 kann durch beliebige technische Maßnahmen erreicht werden, vorgesehen sein kann zum Beispiel eine Kulissenführung, so wie dies in Fig. 12 näher dargestellt ist. Alternativ kann die Verschwenkung bzw. die Verdrehung der Schubeinrichtung 5 und/oder alternativ oder ergänzend die direkte Verschwenkung oder die direkte Verdrehung der Schubelemente 7 durch entsprechende Aktuatoren, Elektromotoren, Hydraulikzylinder oder dergleichen erfolgen. Vorgesehen sein kann auch ein Drehtisch oder dergleichen. Darüber kann im Rahmen der Erfindung vorgesehen sein, die Schubeinrichtung 5 mehrteilig auszubilden, so dass die einzelnen Schritte/Funktionen von verschiedenen Teilen der Schubeinrichtung 5 übernommen werden.

Im Ausführungsbeispiel kann vorgesehen sein, dass die Schubeinrichtung 5 von der Endposition derart in die Ausgangsposition zurückführbar ist, dass durch die Zufuhreinrichtung 8 während der Rückführbewegung die erste und/oder die zweite Steinreihe 100, 200 auf der Förderstrecke 6 positionierbar ist. Dies kann auch entsprechend vorgesehen sein, wenn die Zufuhreinrichtung 8 und/oder die Schubeinrichtung 5 mehrteilig ausgebildet sind. Die Rückführung der Schubeinrichtung (einteilig oder mehrteilig) kann vorzugsweise dadurch erfolgen, dass diese angehoben und somit in einer anderen vertikalen Ebene zurückgeführt wird.

Fig. 12 zeigt lediglich prinzipmäßig dargestellt einen möglichen einfachen Aufbau der Schubeinrichtung 5. Hierzu ist vorgesehen, dass die Schubeinrichtung 5 einen Rahmen 14 aufweist, der geführt auf zwei im Wesentlichen parallel zueinander verlaufenden Führungsschienen 15 in und entgegen der Förderrichtung (Pfeil B) verfahrbar ist. Der Rahmen 14 kann dabei linear verfahrbar sein. Des weiteren ist eine Kulissenführung 16 vorgesehen, welche dazu dient, die Schubstange 13 der Schubeinrichtung 5 während der Vorschubbewegung des Rahmens 14 zu verschwenken. Auf die Verschwenkbewegung der Schubstange 13 und somit der Schubeinrichtung 5 kann insbesondere dann verzichtet werden, wenn ein Ellenbogenverband hergestellt werden soll.

Im Ausführungsbeispiel hat es sich als vorteilhaft herausgestellt, wenn zur Herstellung eines Fischgrätverbands, insbesondere um eine besonders exakte Positionierung der ersten Steinreihe 100 zu erreichen, eine Verschwenkung der Schubstange 13 bereits erfolgt, bevor die Steine 1 der ersten Steinreihe 100 als Schubsteine die Steine 2 der zweiten Steinreihe 200 kontaktieren. Die vorhergehende Verschwenkung ermöglicht es, dass die Steine 1 besonders definiert an den Schubelementen 7 anliegen bzw. dort "hineingerüttelt" bzw. geschwenkt werden. Auch hierauf kann jedoch verzichtet werden. Durch den zweiten Abschnitt D der Kulissenführung wird die Schubstange 13 während der Vorschubbewegung des Rahmens 14 so verschwenkt, dass die Steine 1, 2 von einer Ausrichtung gemäß Fig. 8 in eine Ausrichtung gemäß Fig. 10 verdreht werden.

Es sei nochmals darauf hingewiesen, dass die in Fig. 12 dargestellte Ausgestaltung der Schubeinrichtung 5 beispielhaft ist. Es hat sich als vorteilhaft herausgestellt, zur Erzeugung der Schwenkbewegung der Schubeinrichtung 5 einen Elektromotor und/oder eine entsprechende elektronische Steuerung vorzusehen. Diese kann darauf abgestimmt werden, Verschwenkungen gegebenenfalls so zu erzeugen, dass sich die Steine 1 besonders gut an den Schubelemente 7 anlegen bzw. sich die von den Schubsteinen eingefangenen Steine 2 der zweiten Steinreihe 200 besonders gut eingruppieren lassen. Die elektronische Steuerung kann auch dazu dienen die Verdrehung der Steine 1, 2 ausgehend von einer Ausrichtung gemäß Fig. 8 in eine Ausrichtung gemäß Fig. 10 durchzuführen bzw. zu kontrollieren.

Im Rahmen der Erfindung kann auch vorgesehen sein, dass die Schubeinrichtung die Steine 1 der Steinreihe 100 gleichzeitig kontaktiert um die Steine 1 erfindungsgemäß zu Verdrehen. In diesem Fall müssen die Steine 1 vorher in Vorschubrichtung betrachtet zueinander versetzt angeordnet werden oder die Steine 1 unterschiedlich schnell geschoben werden, damit die Steine 1 eindrehen können. Das Element das dafür sorgt die Steine versetzt zueinander anzuordnen kann dabei im Rahmen der Erfindung einen Teil der Schubeinrichtung darstellen. Auch diese Lösung fällt unter den Schutzumfang der Erfindung.

## Patentansprüche

1. Verfahren zum Gruppieren von Steinen, insbesondere Betonpflastersteinen, zu einem Verband,
**dadurch gekennzeichnet, dass** eine aus mehreren Steinen (1) gebildete erste Steinreihe (100) in eine Ausgangsposition in eine Förderstrecke (6) eingebracht wird, wonach die Steine (1) in der Ausgangsposition derart orientiert werden, dass die Steine (1) nebeneinander liegen und deren Längsachsen wenigstens annähernd in Richtung der Förderstrecke (6) ausgerichtet sind, wonach auf die in Förderrichtung hinten liegende Stirnseite (1a) der Steine (1) jeweils außermittig eine Schubbewegung eingeleitet wird, um eine Drehbewegung der Steine (1) um eine senkrechte Achse zu erzeugen, wonach die Einleitung der Schubbewegung auf die Steine (1) der ersten Steinreihe (100) ausgehend von einem außenliegenden Stein (1') der ersten Steinreihe (100) seriell nacheinander erfolgt, wonach sich die Steine (1) durch die Schubbewegung derart drehen, dass eine in der Ausgangsposition seitlich orientierte Längsseite (1b) des Steines (1) in Vorschubrichtung nach vorne orientiert wird und eine nach der Drehung nach hinten orientierte Längsseite (1c) eines früher gedrehten Steines (1) teilweise überdeckend an einer nach vorne orientierten Längsseite (1b) eines nachfolgend gedrehten Steines (1) anliegt.

2. Verfahren nach Anspruch 1,
**dadurch gekennzeichnet, dass** mehrere Steinreihen (100, 200, 300, 400) derart gedreht und zu einem Verband zusammengeschoben werden.

3. Verfahren nach Anspruch 1 oder 2,
**dadurch gekennzeichnet, dass** eine zweite Steinreihe (200) in eine Zwischenposition in die Förderstrecke (6) eingebracht wird, vorzugsweise derart, dass die Steine (2) der zweiten Steinreihe (200) derart orientiert werden, dass deren Längsachsen wenigstens annähernd in Richtung der Förderstrecke (6) ausgerichtet sind.

4. Verfahren nach Anspruch 3,
**dadurch gekennzeichnet, dass** jeweils ein Stein (1) der ersten Steinreihe (100) als Schubstein für einen Stein (2) der zweiten Steinreihe (200) eingesetzt wird, wonach die erste Steinreihe (100) derart an die zweite Steinreihe (200) herangeführt wird, dass eine nach vorne orientierte Längsseite (1b) eines Steines (1) der ersten Steinreihe (100) eine Schubbewegung in eine hinten liegende Stirnseite (2a) eines Steines (2) der zweiten Steinreihe (200) einleitet und ein hinteres Teilstück einer Längsseite (2b) des Steines (2) der zweiten Steinreihe (200) an einer seitlich orientierten Stirnseite (1d) eines Steines (1) der ersten Steinreihe (100) anliegt, der die nach vorne orientierte Längsseite (1b) des Schubsteines teilweise überdeckt.

5. Verfahren nach Anspruch 3 oder 4,
**dadurch gekennzeichnet, dass** die Steine (2) der zweiten Steinreihe (200) und die Steine (1) der ersten Steinreihe (100) gedreht werden, so dass die Längsachsen der Steine (1,2) der Steinreihen (100,200) schräg zur Förderrichtung verlaufen.

6. Vorrichtung zum Gruppieren von Steinen, insbesondere Betonpflastersteinen zu einem Verband,
**gekennzeichnet durch**
a) eine Zufuhreinrichtung (8), um eine aus mehreren Steinen (1) gebildete erste Steinreihe (100) in einer Ausgangsposition auf einer Förderstrecke (6) nebeneinander so zu positionieren, dass deren Längsachsen wenigstens annähernd in Richtung der Förderstrecke (6) ausgerichtet sind,
b) eine Schubeinrichtung (5) mit Schubelementen (7), wobei jedem Stein der ersten Steinreihe (100) ein Schubelement (7) zugeordnet ist, und wobei das Schubelement (7) an einer zugewandten Stirnseite (1a) des zugeordneten Steins (1) bezogen auf eine vertikale Mittelachse der Stirnseite (1a) außermittig angreift, wobei die Schubelemente (7) und die Steine (1) derart zueinander in Förderrichtung versetzt angeordnet sind, dass zunächst ein Schubelement (7) an einem außen liegenden Stein (1') angreift und dann die Schubelemente (7) jeweils seriell nacheinander an dem jeweils benachbarten, angrenzenden Stein (1") angreifen, wobei die Schubelemente (7) die Steine (1) nacheinander in eine Drehbewegung zwingen derart, dass eine in der Ausgangsposition seitlich ausgerichtete Längsseite (1b) des Steines (1) nach der Drehung in Förderrichtung nach vorne orientiert ist und eine nach hinten orientierte Längsseite (1c) eines früher gedrehten Steines 1' teilweise überdecken an einer nach vorne orientierten Längsseite (1b) eines nachfolgend gedrehten Steins (1") anliegt.

7. Vorrichtung nach Anspruch 6,
**dadurch gekennzeichnet, dass** die Schubeinrichtung (5) mehrere Steinreihen (100, 200, 300, 400) in einer Endposition zur Bildung eines Verbandes zusammenschiebt.

8. Vorrichtung nach Anspruch 6 oder 7,
**dadurch gekennzeichnet, dass** die Schubelemente (7) in Förderrichtung versetzt zueinander angeordnet sind.

9. Vorrichtung nach einem der Ansprüche 6 bis 8,
**dadurch gekennzeichnet, dass** die Schubelemente (7) eine im Wesentlichen vertikal verlaufende Kante (10) aufweisen, welche an dem Stein (1) angreift, um eine Schubbewegung auszuüben, wobei vorzugsweise die an den Steinen (1) angreifende Kante (10) der Schubelemente (7) abgerundet ist.

10. Vorrichtung nach einem der Ansprüche 6 bis 9,
**dadurch gekennzeichnet, dass** die Schubelemente (7) eine Anlagefläche (11) aufweisen, an der die Steine (1) mit einer nach hinten orientierten Längsseite (1c) nach der Drehbewegung anliegen, wobei vorzugsweise das Schubelement (7) zur Ausbildung der vertikalen Kante (10) und der Anlagefläche (11) L-förmig ausgebildet ist.

11. Vorrichtung nach einem der Ansprüche 6 bis 10,
**dadurch gekennzeichnet , dass** die Zufuhreinrichtung (8) ausgebildet ist, um eine zweite Steinreihe (200) in einer Zwischenposition in der Förderstrecke (6) so zu positionieren, dass die Längsachsen der Steine (2) der zweiten Steinreihe (200) wenigstens annähernd parallel zur Förderstrecke (6) ausgerichtet sind.

12. Vorrichtung nach Anspruch 11,
**dadurch gekennzeichnet , dass** die Schubeinrichtung (5) die Steine (1) der ersten Steinreihe (100) derart an die Steine (2) der zweiten Steinreihe (200) heranführt, dass jeweils ein Stein (1) der ersten Steinreihe (100) als Schubstein einem Stein (2) der zweiten Steinreihe (200) zugeordnet ist, wobei eine nach vorne orientierte Längsseite (1b) des Schubsteins eine Schubbewegung in eine hinten liegende Stirnseite (2a) eines Steines (2) der zweiten Steinreihe (200) einleitet und der Stein (2) der zweiten Steinreihe (200) mit einem hinteren Teilstück einer Längsseite (2b) an der Stirnseite (1d) eines Steines (1) der ersten Steinreihe (100) anliegt, der die nach vorne orientierte Längsseite (1b) des Schubsteins teilweise überdeckt.

13. Vorrichtung nach einem der Ansprüche 11 oder 12,
**dadurch gekennzeichnet, dass** die Schubeinrichtung (5) die Steine (2) der zweiten Steinreihe (200) und die Steine (1) der ersten Steinreihe (100) derart gegenüber der Förderstrecke(6) verdreht, dass die Längsachsen der Steine (1, 2) der ersten Steinreihe (100) und der zweiten Steinreihe (200) schräg zur Förderstrecke (6) verlaufen und zueinander in einem Winkel von wenigstens annähernd 90° ausgerichtet sind.

14. Vorrichtung nach einem der Ansprüche 6 bis 13,
**dadurch gekennzeichnet, dass** die Schubeinrichtung (5) entlang der Förderstrecke (6) einer Kulissenführung (16) folgt und/oder zur Verschwenkung bzw. Verdrehung der Schubeinrichtung (5) und/oder zur Verschwenkung oder Verdrehung der Schubelemente (7) Aktuatoren, vorzugsweise wenigstens ein Elektromotor, vorgesehen ist.

15. Vorrichtung nach Anspruch 14,
**dadurch gekennzeichnet , dass** der Drehpunkt bzw. die Schwenkachse der Schubeinrichtung (5) bezogen auf die Erstreckung der Steinreihen (100,200) quer zur Förderrichtung vorzugsweise im Bereich der Mitte angeordnet ist.
